# EUROPÄISCHE PATENTANMELDUNG

(11) **EP 1 201 922 A2**
(43) Veröffentlichungstag der Anmeldung: **02.05.2002**
(21) Anmeldenummer: 01125581.7
(22) Anmeldetag: 25.10.2001
(51) Int. Cl.: F03B 3/12, F03B 3/02

(54) **Hydraulische Strömungsmaschine**

(30) Priorität: 31.10.2000 DE 10053929
(71) Anmelder: Behn, Hans-Joachim, 76133 Karlsruhe (DE); Neurohr, Edward, 76139 Karlsruhe (DE)
(72) Erfinder: Neurohr, Edward, 76139 Karlsruhe (DE)
(74) Vertreter: Truckenmüller, Frank

(57) **Zusammenfassung**

Die Erfindung betrifft eine hydraulische Strömungsmaschine, insbesondere eine Wasserturbine (10), mit einem um eine Laufradachse (27) in Drehung versetzbares Laufrad (21). Das Laufrad (21) weist wenigstens einen im wesentlichen radial oder senkrecht zur Laufradachse (27) von außen mit einem hydraulischen Medium (20) beaufschlagbaren Strömungskanal (30) mit einem Kanaleintritt und einem Kanalaustritt auf. Gemäß einem ersten Lösungsgedanken ist der Kanaleintritt mit einem Element (35) zur Umsetzung im wesentlichen des Druckes und/oder der potentiellen Energie des hydraulischen Mediums (20) in ein Drehmoment zur Drehung des Laufrades (21) ausgebildet und ist mit einem kanalaustrittsseitigen Element (40) zur Druckverlustminimierung hydraulisch verbunden. Gemäß einer bevorzugten Ausgestaltung oder gemäß einem alternativen Lösungsgedanken ist der Kanaleintritt mit einer Druckflanke (15) ausgebildet, die mit einer sich nach innen erstreckenden, einen sich zum Kanalaustritt verjüngenden Durchtrittskanal aufweisenden Düse (13) hydraulisch verbunden ist.

## Beschreibung

Die Erfindung betrifft eine hydraulische Strömungsmaschine, insbesondere eine Wasserturbine, mit einem um eine Laufradachse in Drehung versetzbaren Laufrad, das wenigstens einen im wesentlichen radial oder senkrecht zur Laufradachse von außen mit einem hydraulischen Medium beaufschlagbaren Strömungskanal mit einem Kanaleintritt und einem Kanalaustritt aufweist.

Hydraulische Strömungsmaschinen, wie Wasserturbinen für Wasserkraftwerke, sind seit vielen Jahren bekannt. Typische Bauarten sind beispielsweise Francis-, Kaplan- und Ossberger-Turbinen. Die Standardantriebsmaschine mit Zulaufspirale für hydraulische Kraftwerke - bei mittleren und größeren Fallhöhen - ist zur Zeit die Francis-Turbine. In Flußkraftwerken, wo bei kleineren Fallhöhen relativ große Durchflußmengen vorhanden sind, werden alternativ Kaplan- und einfachere Rohrturbinen eingesetzt.

Die Francis-Turbine ist eine voll beaufschlagte Überdruckturbine, die mit einem relativ aufwendigen Leitapparat für die Steuerung und Beschleunigung des Wasserstromes zu den Laufradschaufeln und für die Leistungsregelung der Turbine versehen ist. Der radiale Zustrom des Triebwassers wird durch die spezielle Form der Laufradschaufeln in Axialrichtung umgelenkt und einem Saugrohr zugeführt. Durch diese Stromumlenkung wird im wesentlichen die kinetische Energie des Wasserstromes ausgenutzt, um ein Drehmoment zur Drehung des Laufrades zu bewirken. Durch die Zergliederung und Umlenkung des Triebwassers ergeben sich bei den relativ hohen Fließgeschwindigkeiten entsprechend hohe Energieverluste, mit der Folge eines reduzierten hydraulischen Wirkungsgrades der Anlage. Bei größeren Einheiten erreicht die Francis-Turbine einen hydraulischen Spitzenwirkungsgrad von maximal 90 Prozent. Das Teillastverhalten unterhalb des Auslegungsbereiches ist bei dieser Turbine vergleichsweise schlecht.

Beim Durchströmen durch das Laufrad wird dem Wasser nur ein Teil der Energie entzogen. Deshalb muß bei der Francis-Turbine, aber auch bei den anderen vorgenannten Turbinenarten im Bereich des Auslasses des Laufrades ein Saugrohr angeschlossen werden. Dieses hat die Aufgabe, die verbleibende kinetische Energie des Wassers in potentielle Energie umzuwandeln. Derartige Saugrohre benötigen relativ viel Einbauraum und die damit ausgestatteten Turbinen sind aufwendig in der Herstellung. Auch wird der hydrodynamische Wirkungsgrad durch die Gestaltung des Saugrohres beeinflußt.

Demgemäß liegt der Erfindung die Aufgabe zugrunde, eine hydraulische Strömungsmaschine, insbesondere eine Wasserturbine mit einem im wesentlichen unabhängig von dem Eingangsdruck bzw. der Fallhöhe des hydraulischen Mediums hohen hydraulischen Wirkungsgrad bei günstigen Einbauverhältnissen zu schaffen. Diese Aufgabe wird gemäß einem ersten Lösungsgedanken dadurch gelöst, daß der Kanaleintritt mit einem Element zur Umsetzung im wesentlichen des Druckes und/oder der potentiellen Energie des hydraulischen Mediums in ein Drehmoment zur Drehung des Laufrades ausgebildet und mit einem kanalaustrittsseitigen Element zur Druckverlustminimierung hydraulisch verbunden ist.

Gemäß einer bevorzugten Ausführungsform oder gemäß einem alternativen Lösungsgedanken wird die vorstehende Aufgabe dadurch gelöst, daß der Kanaleintritt mit einer Druckflanke ausgebildet ist, die mit einer sich nach innen erstreckenden, einen sich zum Kanalaustritt verjüngenden Durchtrittskanal aufweisenden Düse hydraulisch verbunden ist.

Bei der Erfindung geht es also darum, den Kanaleintritt mit einer als Druckflanke ausgebildeten Seitenflanke einer nach innen gerichteten und sich nach innen verjüngenden asymmetrischen Düse auszubilden. Eine derartige Turbine kann auch als Düsenturbine bezeichnet werden.

Durch die vorgenannten Merkmale wird eine hydraulische Strömungsmaschine, insbesondere eine Wasserturbine für den Einsatz in Kleinkraftwerken mit relativ konstantem Unterwasserspiegel geschaffen, die bei vergleichbar kleiner Bauweise einen hohen hydraulischen Wirkungsgrad auch bei stark schwankender Fallhöhe ermöglicht. Beim Ausströmen des Wassers tritt keine Kavitation auf, weil eine freie Ausströmung des hydraulischen Mediums ermöglicht ist. Das Laufrad der Strömungsmaschine muß nicht unterhalb des Unterwasserspiegels eingebaut werden, so daß entsprechend günstige Einbauverhältnisse erzielbar sind. Dadurch, daß das vorzugsweise als Druckflanke ausgebildete Element zur Umsetzung im wesentlichen des Druckes und/oder der potentiellen Energie des hydraulischen Mediums in ein Drehmoment zur Drehung des Laufrades ausgebildet ist, tritt an diesem Element im wesentlichen kein Druckverlust auf und in Verbindung mit dem vorzugsweise als Düse ausgebildeten kanalaustrittsseitigen Element zur Druckverlustminimierung lassen sich die unerwünschten Druckverluste bei hohen Fließgeschwindigkeiten auf ein Minimium reduzieren. Folglich kann mit dieser Strömungsmaschine ein gegenüber dem Stand der Technik erhöhter hydraulischer Wirkungsgrad von bis zu 97 Prozent erreicht werden. Mit anderen Worten, kann durch den Druck des Triebwassers auf das vorzugsweise als Druckflanke bzw. Seitenflanke der Düse ausgebildete Element zur Umsetzung im wesentlichen des Druckes und/oder der potentiellen Energie des hydraulischen Mediums in ein Drehmoment zur Drehung des Laufrades, das Laufrad in Bewegung gesetzt werden. Folglich wird durch die erfindungsgemäße Ausgestaltung der Strömungsmaschine weitgehend die potentielle Energie des hydraulischen Mediums als Antriebsfaktor genutzt, um die unerwünschten Druckverluste von Umlenkungen bei hohen Fließgeschwindigkeiten zu vermeiden. Gleichzeitig fließt das Triebwasser durch das vorzugsweise als ein sich nach innen erstreckende, einen sich zum Kanalaustritt verjüngenden Durchtrittskanal aufweisende Düse ausgebildete kanalaustrittseitige Element zur Druckverlustminimierung und wird dabei bis zu den Austrittsöffnungen ständig beschleunigt. Bei günstiger Element- bzw. Düsengestaltung kann eine Ausflußzahl erreicht werden, die nahe an dem Wert 1 liegt, so daß die Austrittsgeschwindigkeit des hydraulischen Mediums nur eine Funktion des Eingangsdruckes bzw. der Fallhöhe darstellt. Bei geringeren Eingangsdrucken bzw. Fallhöhen sinken zwar der Durchfluß, die Drehzahl und die Turbinenleistung, nicht aber der hydraulische Wirkungsgrad der Strömungsmaschine. Folglich wird ein gleichbleibend hoher hydraulischer Wirkungsgrad auch bei den unterschiedlichsten Belastungen erreicht.

Zweckmäßigerweise ist die Druckflanke mit einer im wesentlichen zylindermantelsegmentförmigen, vorzugsweise parallel zur Laufradachse ausgebildeten Druckfläche gestaltet. Dadurch lassen sich günstige hydraulische Zuströmverhältnisse zu den Düsen erzielen.

Gemäß einer vorteilhaften Weiterbildung ist der Durchtrittskanal der Düse in einer senkrecht zur Laufradachse angeordneten Schnittebene symmetrisch zu einer Düsenlängsachse ausgebildet. Durch diese Maßnahmen läßt sich der Druckverlust an der Düse minimal halten und dementsprechend kann ein maximaler Wert des hydraulischen Wirkungsgrades der Strömungsmaschine beibehalten werden.

Dabei ist es zweckmäßig, wenn die Düsenlängsachse beabstandet zu der Laufradachse angeordnet ist. Auf diese Weise lassen sich die erwünschten Drehmomentenverhältnisse erzielen.

Von besonderem Vorteil ist es, wenn die Düse eine mit einer Hauptausströmrichtung zusammenfallende Düsenlängsachse aufweist, die gegenüber einer normal zur Laufradachse angeordneten Schnittebene um einen Neigungswinkel geneigt ausgebildet ist, der vorzugsweise kleiner ist als 14 Grad. Auf diese Weise lassen sich unerwünschte Gegendrehmomente durch Kollision des aus der Düse ausgetretenen Hauptaustrittsstrahls des hydraulischen Mediums mit Teilen des Laufrades vermeiden, so daß der hohe hydraulische Wirkungsgrad der Strömungsmaschine erhalten bleibt.

Gemäß einer zweckmäßigen Weiterbildung weist der Durchtrittskanal der Düse einen im wesentlichen rechteckigen Durchflußquerschnitt auf. Dadurch sind günstige Platz- und Einbauverhältnisse sowie große Volumenströme und hohe Turbinenleistungen möglich.

Gemäß einer bevorzugten Weiterbildung der Erfindung weist die Düse eine Eintrittsbreite und in einer normal zur Laufradachse ausgebildeten Schnittebene einen ihrer Eintrittsbreite entsprechenden gedachten Eintrittsschenkel auf und die Druckflanke weist eine Länge und in derselben Schnittebene einen ihrer Länge entsprechenden, gedachten Druckschenkel auf. Dadurch sind günstige Berechnungsverhältnisse für die Auslegung der hydraulischen Strömungsmaschine ermöglicht.

Dabei ist es zweckmäßig, wenn ein dem Eintrittsschenkel zugeordneter, senkrecht zur Laufradachse ausgebildeter, gedachter Hebelarm und ein dem Druckschenkel zugeordneter, senkrecht zur Laufradachse ausgebildeter, gedachter Hebelarm, im wesentlichen gleich groß sind.

Es ist ferner zweckmäßig, wenn der Eintrittsschenkel der Düse und der Druckschenkel der Druckflanke einen Schenkelwinkel einschließen, der abhängig von der Anzahl der Düsen derart ausgebildet ist, daß bei einer Drehung des Laufrades ein durch den Kanalaustritt austretender Hauptstrom des hydraulischen Mediums das Laufrad im wesentlichen berührungsfrei verläßt, so daß ein minimaler Neigungswinkel der Düsenachse ermöglicht ist.

Gemäß einer bevorzugten Ausgestaltung der Erfindung umfaßt das Laufrad 16 Düsen und der Schenkelwinkel beträgt etwa 95 Grad.

Zweckmäßigerweise ist die Laufradachse im eingebauten Zustand im wesentlichen senkrecht angeordnet. Auf diese Weise lassen sich günstige Lauf- und Abdichtverhältnisse und vorteilhafte Berechnungsverhältnisse bei der Turbinenauslegung erreichen.

Gemäß einer weiteren zweckmäßigen Ausgestaltung der Erfindung ist das Laufrad walzenförmig mit einem zu dem Strömungskanal geschlossenen Laufradboden und mit einem nach innen offenen Laufradkranz gestaltet, zwischen denen der Strömungskanal angeordnet ist. Diese Maßnahmen erlauben eine kompakte Bauweise und demgemäß vorteilhafte Einbauverhältnisse sowie günstige Abdicht-, Lager- und Strömungsverhältnisse sowie einen maximalen hydraulischen Wirkungsgrad der Strömmungsmaschine.

Von besonderem Vorteil ist es, wenn eine Mehrzahl von über den Umfang des Laufrades benachbart angeordnete, jeweils mit sich nach innen erstreckenden Düsen ausgebildete Strömungskanäle vorgesehen sind, wobei zwischen jeweils zwei benachbarten Düsen jeweils eine Druckflanke angeordnet ist. Dadurch lassen sich hohe Volumenströme und Tubinenleistungen bei einem maximalen hydraulischen Wirkungsgrad der Strömungsmaschine erreichen.
Es ist ferner von Vorteil, wenn das Laufrad umfangsseitig von einem spiralförmigen Zulaufkanal umgeben ist, der in hydraulischer Verbindung mit dem Kanaleintritt des jeweiligen Strömungskanals steht. Dies ermöglicht günstige Zufluß-, Strömungs- und Druckverhältnisse an dem jeweiligen Strömungskanal.

Vorstehende Maßnahmen tragen sowohl einzeln als auch in Kombination untereinander zu einer hydraulischen Strömungsmaschine, insbesondere einer Wasserturbine, mit einem im wesentlichen unabhängig von dem Eingangsdruck bzw. der Fallhöhe des hydraulischen Mediums hohen hydraulischen Wirkungsgrad bei günstigen Einbau- und Auslegungsverhältnissen bei.

Weitere Merkmale, Gesichtspunkte und Vorteile der Erfindung sind dem nachfolgenden, anhand der Figuren abgehandelten Beschreibungsteil entnehmbar, in dem ein bevorzugtes Ausführungsgbeispiel der Erfindung beschrieben ist. Es zeigen:
- Fig. 1: eine Seitenansicht des Laufrades;
- Fig. 2: einen Querschnitt durch das Laufrad entlang der Schnittlinien 2 - 2 gemäß Fig. 1;
- Fig. 3: einen Querschnitt durch das Laufrad gemäß Fig. 1 entlang der Schnittlinien 3 - 3 gemäß Fig. 2;
- Fig. 4: einen Axialquerschnitt, durch die das Laufrad gemäß Fig. 1 enthaltende Strömungsmaschine;
- Fig. 5: eine schematische Teilansicht der Konstruktion des als Düse gestalteten Elements zur Druckverlustminimierung und des als Druckflanke ausgebildeten Elements zur Umsetzung im wesentlichen des Druckes und/oder der potentiellen Energie des hydraulischen Mediums in ein Drehmoment zur Drehung des Laufrades, zur Veranschaulichung der Schenkel-, Hebelarm- und Winkelverhältnisse;
- Fig. 6: eine schematische Darstellung eines Axialschnittes durch die Düse in der Schnittebene gemäß Fig. 2 zur Veranschaulichung der konstruktiven Detailverhältnisse.

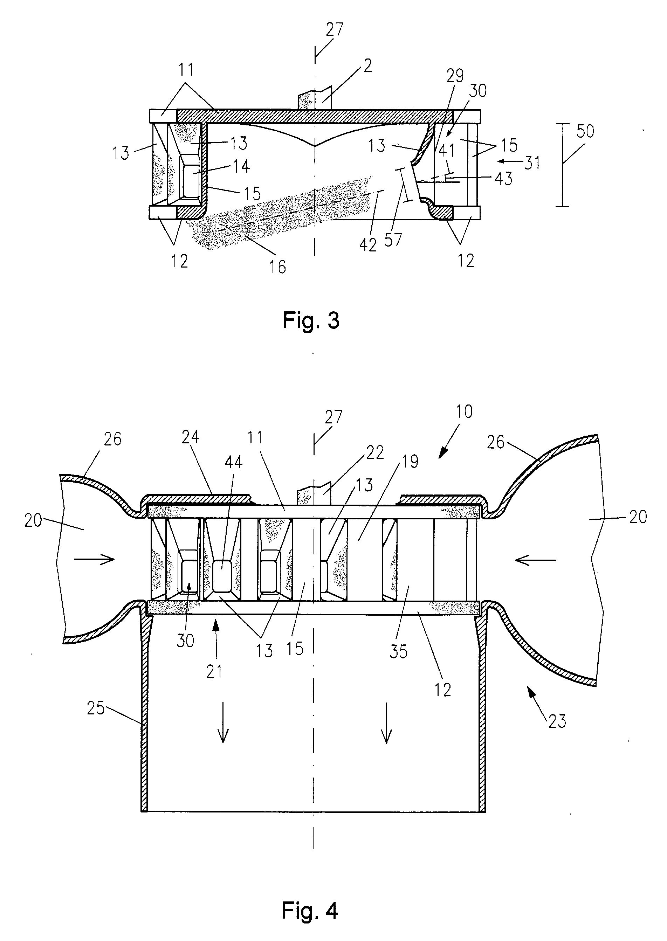

Die in Fig. 4 im Teilquerschnitt gezeigte Strömungsmaschine ist als Wasserturbine 10 gestaltet. Diese umfaßt das Turbinengehäuse 23 und das darin drehbar gelagerte Laufrad 21. Das Turbinengehäuse 23 ist im Ausführungsbeispiel mit einer auch als spiralförmiger Zulaufkanal bezeichneten Zulaufspirale 26 für das hydraulische Medium 20, hier in Form von Wasser ausgebildet. Die Zulaufspirale 26 ist um den Außenumfang des Laufrades 21 angeordnet und ist zum Laufrad hin offen gestaltet. Das Turbinengehäuse 23 umfaßt ferner den Turbinendeckel 24 und das Auslaufrohr 25, die jeweils mit der Zulaufspirale 26 verbunden sind.

Das Laufrad 21 ist walzenförmig ausgebildet und umfaßt den kreisscheibenförmigen Laufradboden 11 und den kreisringförmigen Laufradkranz 12, welche hier denselben Außendurchmesser aufweisen und deren jeweils in entgegengesetzte Richtungen weisende Außenoberflächen im wesentlichen parallel zueinander gestaltet sind. Der Laufradboden 11 ist mit der zentralen Welle 22 fest verbunden, deren Längsachse mit der Laufradachse 27 zusammenfällt. Bei einem Betrieb der Strömungsmaschine als Wasserturbine 10 kann folglich die Welle 22 als Antriebswelle für einen in den Figuren nicht näher gezeigten Generator dienen, wobei es für eine optimale Stromerzeugung sinnvoll ist, daß zwischen der Wasserturbine 10 und dem Generator ein ebenfalls in den Figuren nicht gezeigter Drehzahlvariator eingebaut wird. Die Wasserturbine 10 ist vorzugsweise in der aus Fig. 4 ersichtlichen Arbeitsstellung eingebaut, d.h. die Laufradachse 27 des Laufrades 21 ist im eingebauten Zustand im wesentlichen senkrecht angeordnet. Auf diese Weise befinden sich die Kanaleintritte 31 jedes Strömungskanals 30 auf demselben Niveau mit einem der Fallhöhe entsprechenden, im wesentlichen gleichen Druck des hydraulischen Mediums beaufschlagt werden. Bei der aus den Figuren ersichtlichen Wasserturbine 10 kann folglich die Nennfallhöhe durch den Höhenunterschied zwischen dem Oberwasserspiegel und den Düsenlängsachsen 41 berechnet werden. Zwischen dem Laufradboden 11 und dem Laufradkranz 12 sind eine Mehrzahl, im Ausführungsbeispiel 16, über den Laufradumfang in gleichen Abständen verteilt angeordnete, von außen nach innen verlaufende und nach außen sowie nach innen offene Strömungskanäle 30 ausgebildet. Jeder Strömungskanal 30 umfaßt einen Kanaleintritt 31 und einen Kanalaustritt 32. Die Strömungskanäle 30 sind über die Zulaufspirale 26 im wesentlichen radial bzw. senkrecht zur Laufradachse 27 des Laufrades 21 von außen mit dem hydraulischen Medium 20 beaufschlagbar.

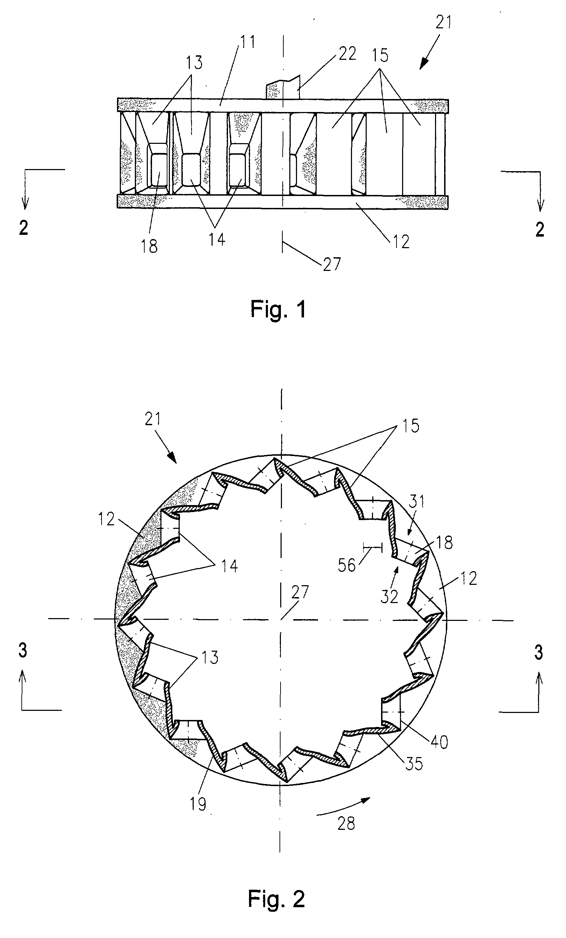

Der Kanaleintritt 31 des Strömungskanals 30 umfaßt ein als Druckflanke 15 ausgebildetes Element 35 zur Umsetzung im wesentlichen des Druckes und/oder der potentiellen Energie des hydraulischen Mediums 20 in ein Drehmoment zur Drehung des Laufrades 21. Das Element 35 bzw. die Druckflanke 15 ist mit einem kanalaustrittsseitigen Element 40 zur Druckverlustminimierung hydraulisch verbunden, das im Ausführungsbeispiel mit einer Düse 13 ausgebildet ist, welche einen sich zum Kanalaustritt 32 verjüngenden Durchtrittskanal 18 aufweist. Dabei sind im Ausführungsbeispiel sechzehn Strömungskanäle 30 und dementsprechend sechzehn über den Umfang des Laufrades 21 benachbart angeordnete, sich nach innen erstreckende Düsen 13 vorgesehen, wobei zwischen jeweils zwei benachbarten Düsen 13 - 13 jeweils eine Druckflanke 15 angeordnet ist. Demgemäß ist das Laufrad 21 mit 16 asymmetrischen, nach innen gerichteten Düsen 13 bestückt und zwischen jeweils zwei unmittelbar benachbarten Düsen 13 - 13 befindet sich jeweils eine Druckflanke 15 einer Seitenflanke einer der Düsen 13. Die Druckflanke 15 ist mit einer im wesentlichen zylindermantelsegmentförmigen, parallel zur Laufradachse 27 ausgebildeten Druckfläche 19 gestaltet, die den Druck und/oder die potentielle Energie des von außen das Laufrad radial beaufschlagenden hydraulischen Mediums 20 ohne wesentliche Druckverluste aufnimmt. Bedingt durch die Anordnung und Gestaltung der Druckflanken 15 wird das Laufrad mit einem Drehmoment beaufschlagt, das bewirkt, daß das Laufrad in der in Fig. 2 veranschaulichten Drehrichtung 28 um die Laufradachse 27 in Drehung versetzt wird, wobei das hydraulische Medium jeweils durch die nach innen gerichteten Düsen 13 in das Auslaufrohr 25 abgeleitet wird.

Der Durchtrittskanal 18 der Düse 13 ist in der in Fig. 2 gezeigten, senkrecht zur Laufradachse 27 angeordneten Schnittebene symmetrisch zu einer Düsenlängsachse 41 ausgebildet. Dabei ist die Düsenlängsachse 41 beabstandet zu der Laufradachse 27 derart angeordnet, daß sie sich mit der Laufradachse 27 nicht schneidet. Die eine Hauptausströmrichtung 42 des hydraulischen Mediums 20 bestimmende Düsenlängsachse 41 der Düse 13 ist gegenüber einer normal zur Laufradachse 27 angeordneten Schnittebene um einen Neigungswinkel 43 geneigt ausgebildet (Fig. 3). Um einen hohen hydraulischen Wirkungsgrad der Wasserturbine 10 zu gewährleisten, darf der maximale Neigungswinkel 43 den Wert von 14 Grad nicht überschreiten.

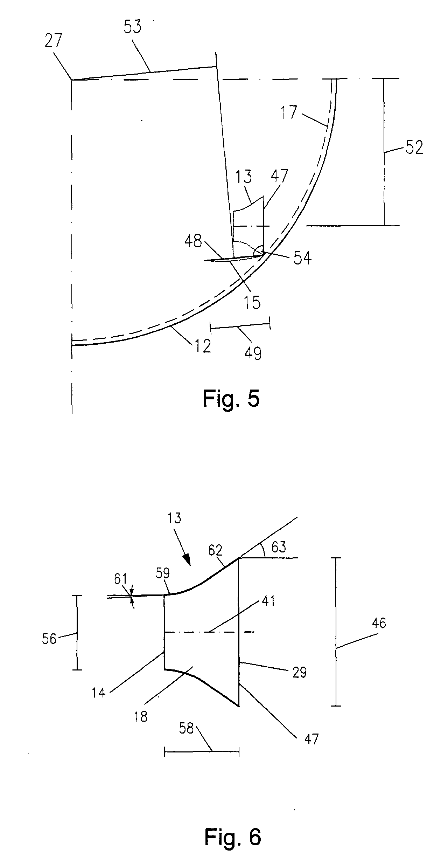

Der Durchtrittskanal 18 der Düse 13 weist einen im wesentlichen rechteckingen Durchflußquerschnitt 44 auf. Dabei ist die Düse 13 mit einer Eintrittsöffnung 29 ausgebildet, die eine Eintrittshöhe 50 (Fig. 3) und eine Eintrittsbreite 46 (Fig. 6) aufweist. Die Düse 13 umfaßt ferner eine Austrittsöffnung 14, die eine Austrittshöhe 57 (Fig. 3) und eine Austrittsbreite 56 (Fig. 6) aufweist. Wie in der schematischen Ansicht gemäß Fig. 5 dargestellt, umfaßt jeder Strömungskanal 30 des Laufrades 21 ein aus zwei im wesentlichen gleich langen Schenkeln bestehendes aktives Laufradelement. Demgemäß weist die Düse 13 in einer normal zur Laufradachse 27 ausgebildeten Schnittebene einen ihrer Eintrittsbreite 46 entsprechenden, gedachten Eintrittschenkel 47 auf und die Druckflanke 15 weist in derselben Schnittebene einen ihrer Länge 49 entsprechenden gedachten Druckschenkel 48 auf, wobei die Länge 49 des Druckschenkels 48 im wesentlichen der Eintrittsbreite 46 des Eintrittschenkels 47 der Düse 13 entspricht. Der Eintrittsschenkel 47 und der Druckschenkel 48 bilden gegenüber der Drehachse 27 in der in Fig. 5 gezeigten, normal zu dieser ausgebildeten Schnittebene, die Hebelarme 52 und 53 aus, die hier im wesentlichen gleich groß sind. Wie ebenfalls aus Fig. 5 ersichtlich, schneiden sich der Eintrittsschenkel 47 und der Druckschenkel 48 in einem Punkt, der auf einem generischen Kreis 17 für die Düsenberechnung angeordnet ist. Der Eintrittsschenkel 47 und der Druckschenkel 48 schließen dabei einen Schenkelwinkel 54 ein, der abhängig von der Anzahl der Düsen 13 derart ausgebildet ist, daß bei einer Drehung des Laufrades 21 ein durch den Kanalaustritt 32 austretender Hauptstrom 16 des hydraulischen Mediums 20 das Laufrad 21 im wesentlichen berührungsfrei verläßt, so daß ein minimaler Neigungswinkel 43 der Düsenlängsachse 41 ermöglicht ist, der im Ausführungsbeispiel etwa 95 Grad beträgt.

Die im Ausführungsbeispiel vertikalen Seitenwände 59 im Bereich der Austrittsöffnung 14 der Düse 13 bilden in dem in Fig. 6 gezeigten Horizontalschnitt bzw. in einer normal zur Laufradachse 27 ausgebildeten Schnittebene mit der Düsenlängsachse 41 einen Austrittswinkel 61 von hier etwa 3 Grad. Demgegenüber bilden die im Ausführungsbeispiel ebenfalls vertikalen Seitenwände 62 im Bereich der Eintrittsöffnung 29 der Düse 13 mit der Düsenlängsachse 41 in der in Fig. 6 gezeigten Schnittebene einen Eintrittswinkel 63, von hier etwa 35 Grad. Um einen störungsfreien Strömungsverlauf zu erreichen, ist die Düse 13 im Bereich zwischen ihrer Eintrittsöffnung 29 und ihrer Austrittsöffnung 14 in der normal zur Laufradachse 27 ausgebildeten Schnittebene symmetrisch zu ihrer Düsenlängsachse 41 ausgebildet. Eine günstige Strömungsführung durch diesen Teil der Düse 13 wird ferner dadurch ermöglicht, daß die Seitenwände 62 unter Ausbildung des in der Schnittebene gemäß Fig. 6 ersichtlichen kontinuierlichen, parabelförmigen Linienzuges in die Seitenwände 59 übergehen.
Bei Beaufschlagung des Laufrades 21 mit dem hydraulischen Medium 20 wird das Laufrad 21 durch den Druck des aus der Zulaufspirale 26 zugeführten hydraulischen Mediums auf die Druckflanken 15 in Bewegung gesetzt. Gleichzeitig fließt das hydraulische Medium durch die Düsen 13 und es wird bis zu den Austrittsöffnungen 14 ständig beschleunigt. An den Austrittsöffnungen 14 der Strömungskanäle 30 erreicht das hydraulische Medium eine Geschwindigkeit, die sich aus dem Produkt der Ausflußzahl der Düsen 13 und der Wurzel aus dem Zweifachen der Erdbeschleunigung g und der Fallhöhe h berechnen läßt. Die aktive Horizontalkomponente der Austrittsgeschwindigkeit läßt sich als das Produkt der Austrittsgeschwindigkeit und dem Kosinus des Neigungswinkels 43 berechnen. Bei einer gemäß Fig. 6 ausgebildeten Querschnittsgestaltung der Düse 13 liegt die Ausflußzahl nahe dem Wert 1, so daß die Austrittsgeschwindigkeit nur eine Funktion der variablen Fallhöhe h darstellt. Demgemäß kann die Summe der Austrittsquerschnitte, die sich jeweils aus dem Produkt der Austrittsbreite 56 und der Austrittshöhe 57 berechnen läßt, in Abhängigkeit vom Bemessungsabfluß Q der Wasserturbine 10 und der Fallhöhe h, gemäß der Kontinuitätsformel, aus dem Quotienten des Bemessungsabflusses Q und der Austrittsgeschwindigkeit berechnet werden. Wie aus den Fig. 5 und 6 ersichtlich, wird für die Austrittsbreite 56 der Austrittsöffnung 14 der Düse 13 im Ausführungsbeispiel die halbe Eintrittsbreite 46 des Eintrittsschenkels 47 angenommen. Die Austrittshöhe 57 (Fig. 3) der Austrittsöffnung 14 läßt sich aus der Summe der Austrittsquerschnitte und der Austrittsbreite 56 der Austrittsöffnungen 14 in einfacher Weise aus dem Quotienten der letztgenannten Größen ermitteln.

Ein besonderer Vorteil der vorstehend beschriebenen Düsenkonstruktion ist es demnach, daß die Austrittshöhe 57 der Austrittsöffnung 14 in Abhängigkeit von dem Bemessungsdurchfluß Q und der maximalen Fallhöhe h berechenbar ist.

## Patentansprüche

1. Hydraulische Strömungsmaschine, insbesondere eine Wasserturbine, mit einem um eine Laufradachse in Drehung versetzbaren Laufrad, das wenigstens einen im wesentlichen radial oder senkrecht zur Laufradachse von außen mit einem hydraulischen Medium beaufschlagbaren Strömungskanal mit einem Kanaleintritt und einem Kanalaustritt aufweist,
**dadurch gekennzeichnet,**
**daß** der Kanaleintritt (31) mit einem Element (35) zur Umsetzung im wesentlichen des Druckes und/oder der potentiellen Energie des hydraulischen Mediums (20) in ein Drehmoment zur Drehung des Laufrades (21) ausgebildet und mit einem kanalaustrittseitigen Element (40) zur Druckverlustminimierung hydraulisch verbunden ist.

2. Hydraulische Strömungsmaschine, insbesondere eine Wasserturbine, mit einem um eine Laufradachse in Drehung versetzbaren Laufrad, das wenigstens einen im wesentlichen radial oder senkrecht zur Laufradachse von außen mit einem hydraulischen Medium beaufschlagbaren Strömungskanal mit einem Kanaleintritt und einem Kanalaustritt aufweist, insbesondere nach Anspruch 1,
**dadurch gekennzeichnet,**
**daß** der Kanaleintritt (31) mit einer Druckflanke (15) ausgebildet ist, die mit einer sich nach innen erstrekkenden, einen sich zum Kanalaustritt (32) verjüngenden Durchtrittskanal (18) aufweisenden Düse (13) hydraulisch verbunden ist.

3. Hydraulische Strömungsmaschine nach Anspruch 2, **dadurch gekennzeichnet, daß** die Druckflanke (15) mit einer im wesentlichen zylindermantelsegmentförmigen, vorzugsweise parallel zur Laufradachse (27) ausgebildeten Druckfläche (19) gestaltet ist.

4. Hydraulische Strömungsmaschine nach einem der Ansprüche 2 oder 3, **dadurch gekennzeichnet, daß** der Durchtrittskanal (18) der Düse (13) in einer senkrecht zur Laufradachse (27) angeordneten Schnittebene symmetrisch zu einer Düsenlängsachse (41) ausgebildet ist

5. Hydraulische Strömungsmaschine nach Anspruch 4, **dadurch gekennzeichnet, daß** die Düsenlängsachse (41) beabstandet zu der Laufradachse (27) angeordnet ist.

6. Hydraulische Strömungsmaschine nach einem der Ansprüche 2 bis 5, **dadurch gekennzeichnet, daß** die Düse (13) eine mit einer Hauptausströmrichtung (42) zusammenfallende Düsenlängsachse (41) aufweist, die gegenüber einer normal zur Laufradachse (27) angeordneten Schnittebene um einen Neigungswinkel (43) geneigt ausgebildet ist, der vorzugsweise kleiner ist als 14 Grad.

7. Hydraulische Strömungsmaschine nach einem der Ansprüche 2 bis 6, **dadurch gekennzeichnet, daß** der Durchtrittskanal (18) der Düse (13) einen im wesentlichen rechteckigen Durchflußquerschnitt (44) aufweist.

8. Hydraulische Strömungsmaschine nach einem der Ansprüche 6 oder 7, **dadurch gekennzeichnet, daß** die Düse (13) eine Eintrittsbreite (46) und in einer normal zur Laufradachse (27) ausgebildeten Schnittebene einen ihrer Eintrittsbreite (46) entsprechenden gedachten Eintrittsschenkel (47) aufweist, und daß die Druckflanke (15) eine Länge (49) und in derselben Schnittebene einen ihrer Länge (49) entsprechenden gedachten Druckschenkel (48) aufweist, dessen Länge (49) der Eintrittsbreite entspricht.

9. Hydraulische Strömungsmaschine nach Anspruch 8, **dadurch gekennzeichnet, daß** ein dem Eintrittsschenkel (47) zugeordneter, senkrecht zur Laufradachse (27) ausgebildeter, gedachter Hebelarm (57) und ein dem Druckschenkel (48) zugeordneter, senkrecht zur Laufradachse (27) ausgebildeter, gedachter Hebelarm (53), im wesentlichen gleich groß sind.

10. Hydraulische Strömungsmaschine nach einem der Ansprüche 8 oder 9, **dadurch gekennzeichnet, daß** der Eintrittsschenkel (47) der Düse (13) und der Druckschenkel (48) der Druckflanke (15) einen Schenkelwinkel (54) einschließen, der abhängig von der Anzahl der Düsen (13) derart ausgebildet ist, daß bei einer Drehung des Laufrades (21) ein durch den Kanalaustritt (32) austretender Hauptstrom (16) des hydraulischen Mediums (20) das Laufrad (21) im wesentlichen berührungsfrei verläßt, so daß ein minimaler Neigungswinkel (43) der Düsenlängsachse (41) ermöglicht ist.

11. Hydraulische Strömungsmaschine nach Anspruch 10, **dadurch gekennzeichnet, daß** das Laufrad (21) sechzehn Düsen (13) umfaßt und der Schenkelwinkel (54) etwa 95 Grad beträgt.

12. Hydraulische Strömungsmaschine nach einem der Ansprüche 1 bis 11, **dadurch gekennzeichnet, daß** die Laufradachse (27) im eingebauten Zustand im wesentlichen senkrecht angeordnet ist.

13. Hydraulische Strömungsmaschine nach einem der Ansprüche 1 bis 12, **dadurch gekennzeichnet, daß** das Laufrad (21) walzenförmig mit einem zu dem Strömungskanal (30) geschlossenen Laufradboden (11) und mit einem nach innen offenen Laufradkranz (12) gestaltet ist, zwischen denen der Strömungskanal (30) angeordnet ist.

14. Hydraulische Strömungsmaschine nach einem der Ansprüche 1 bis 13, **dadurch gekennzeichnet, daß** eine Mehrzahl von über den Umfang des Laufrades (21) benachbart angeordnete, jeweils mit sich nach innen erstreckenden Düsen (13) ausgebildete Strömungskanäle (30) vorgesehen sind, wobei zwischen jeweils zwei benachbarten Düsen (13, 13) jeweils eine Druckflanke (15) angeordnet ist.

15. Hydraulische Strömungsmaschine nach einem der Ansprüche 1 bis 14, **dadurch gekennzeichnet, daß** das Laufrad (21) umfangsseitig von einem spiralförmigen Zulaufkanal (26) umgeben ist, der in hydraulischer Verbindung mit dem Kanaleintritt (31) des jeweiligen Strömungskanals (30) steht.
